# FASCICULE DE BREVET EUROPEEN

(11) **EP 3 383 736 B1**
(45) Date de publication et mention de la délivrance du brevet: **03.06.2020**
(21) Numéro de dépôt: 16825797.0
(22) Date de dépôt: 28.11.2016
(51) Int. Cl.: B63H 9/06

(54) **VOILE RIGIDE SEGMENTEE**
SEGMENTIERTES STARRES SEGEL
SEGMENTED RIGID SAIL

(30) Priorité: 30.11.2015 FR 1502491
(43) Date de publication de la demande: 10.10.2018
(73) Titulaire: Serre, Gilles, 91330 Yerres (FR)
(72) Inventeur: Serre, Gilles, 91330 Yerres (FR)
(74) Mandataire: Delaveau, Sophie
(86) Numéro de dépôt international: PCT/FR2016/000195
(87) Numéro de publication internationale: WO 2017/093619

(56) Documents cités:
- FR-A1- 2 662 660
- US-A- 3 403 653
- US-A- 4 895 091
- US-A1- 2013 014 683

## Description

La présente invention concerne une nouvelle approche d'une voile de bateau, basée sur une voile rigide de type « aile » morcelée en segments indépendants.

Les voiles de type « aile » actuellement utilisées sur les voiliers de dernière génération ont pour inconvénients, une trop grande rigidité, l'impossibilité de pouvoir être « affalées », c'est-à-dire de pouvoir réduire leur surface au vent, et obligent à des manœuvres spécifiques assez éloignées de la voile traditionnelle. En effet, une équipe spécialement entraînée sur ce type de voile, doit gérer les volets avant et arrière et régler le vrillage de la voile par torsion mécanique. L' « affalage » quant à lui consiste dans le démontage pur et simple de la voile, ce qui ne peut s'effectuer qu'une fois rentré au port et avec du matériel de grutage spécifique. Le précédent brevet n° FR13 00180 (N° et date de publication : FR3001437 - 2014-08-01 [BOPI 2014-31]) visait à décrire un procédé permettant la réduction de surface d'une voile rigide. La mise en œuvre de différents prototypes liés à ce brevet nous amène aujourd'hui à considérer la voile ainsi obtenue comme une nouvelle approche de la voile rigide.

Le dispositif selon l'invention permet donc de remédier à l'ensemble des inconvénients de la voile rigide, tout en en simplifiant les manœuvres. La voile est composée de la superposition de segments de voile rigide, chaque segment conservant les caractéristiques de la voile « aile », tout en restant indépendant des segments voisins. Le profil de voile est contrôlé selon deux méthodes indépendantes et complémentaires. A l'avant de la voile, les segments sont reliées entre eux par leur volet avant, selon un procédé permettant de régler leur liberté relative, jouant sur l'angle que chaque segment peut prendre par rapport à ses voisins. A l'arrière, « l'écoute », la corde permettant de régler la voile, relie chaque segment par son volet arrière, de haut en bas, permettant de régler l'ouverture de la voile tout en conservant la souplesse de profil souhaité.
Cette configuration de voile permet également la gestion de la surface au vent tel que décrit dans le brevet n° FR13 00180.

Les dessins annexés illustrent l'invention :

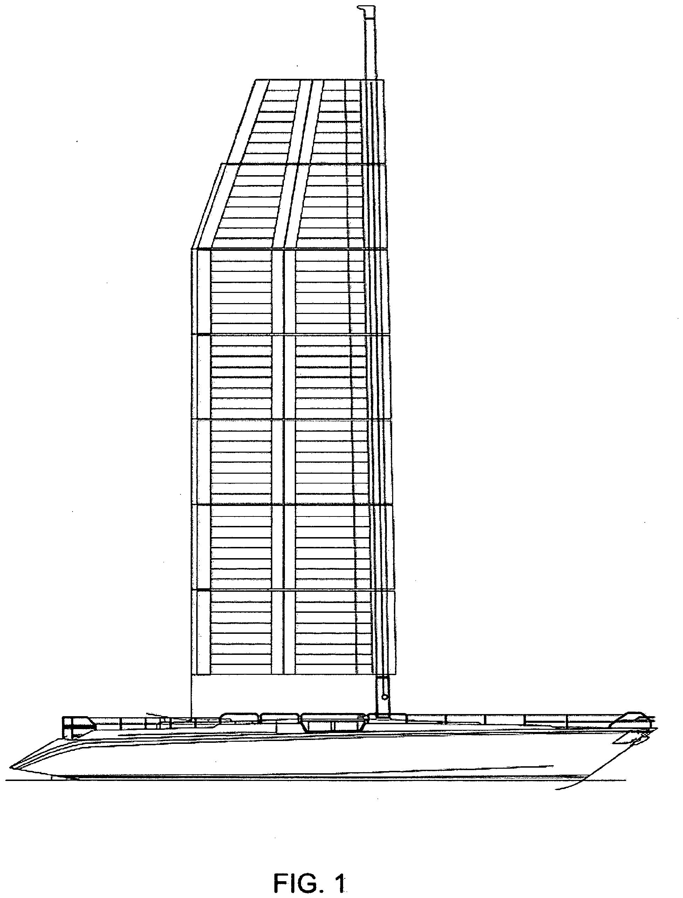

La figure 1 représente une vue d'ensemble du dispositif monté sur un voilier.
La figure 2 détaille le réglage de liberté de mouvement inter-segments.
La figure 3 détaille le réglage de la voile en fonctionnement, par le biais de « l'écoute »
La figure 4 rappelle le fonctionnement de réduction/augmentation de la surface au vent d'un segment tel que décrit dans le brevet n° FR13 00180.

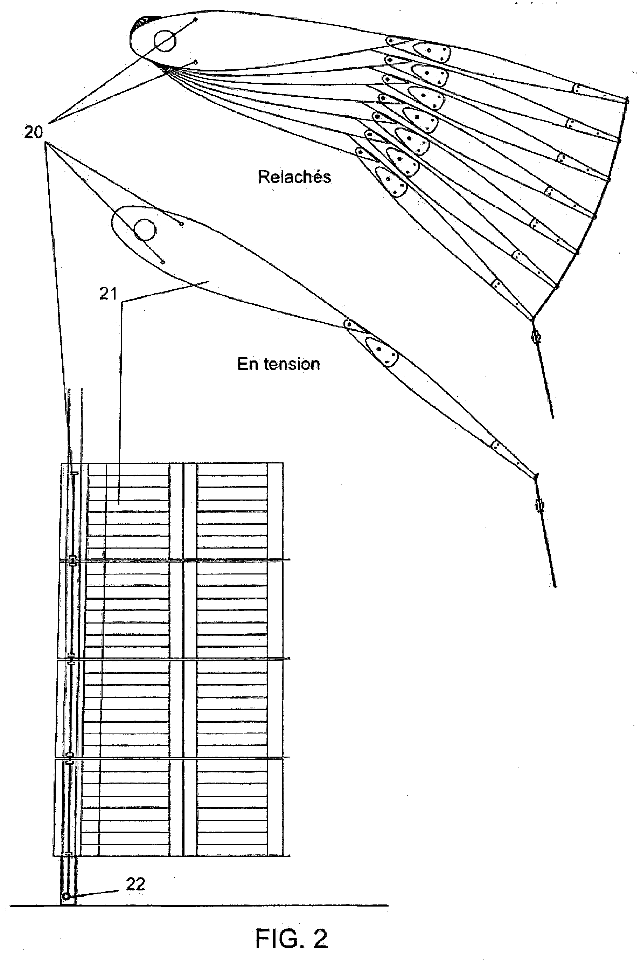

### Réglage de liberté de mouvement inter-segments de la voile (FIG. 2)

Le principe général de cette nouvelle voile consiste à morceler la voile rigide pour obtenir autant de segments susceptibles de s'orienter indépendamment de ses voisins, fonction du vent reçu. Cependant, et afin de garder une cohérence globale de la voile, les différents segments sont reliés entre eux par leur volet avant (21). Pour les bateaux de petite dimension, cette liaison est réalisée, par un système simple de câbles (20), passant de segment en segment et dont la tension, par enroulement autour d'un tambour (22), règle leur liberté relative. Pour les bâtiments de plus grande taille, ce réglage peut être réalisé par tout système mécanique et/ou électromécanique approprié.

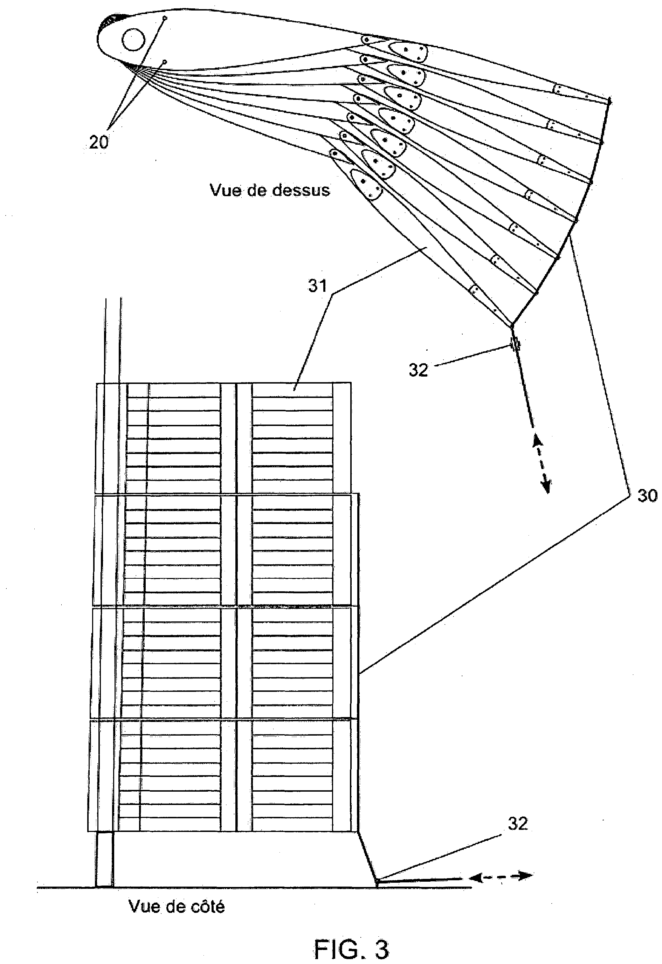

### Réglage de la voile en fonctionnement (FIG. 3)

Pouvoir avancer à la voile nécessite à la fois de gérer son orientation, fonction du sens du vent et de la direction prise par le bateau, mais également le réglage de sa puissance, facteur déterminant de la vitesse de progression du bateau. Ces réglages sont effectués grâce à « l'écoute » (30), cordage reliant chaque segment par son volet arrière (31). Le réglage de la voile s'effectue alors comme sur un voilier traditionnel, par tension / lâcher de l'écoute passant par une poulie (32) fixée au pont du navire.

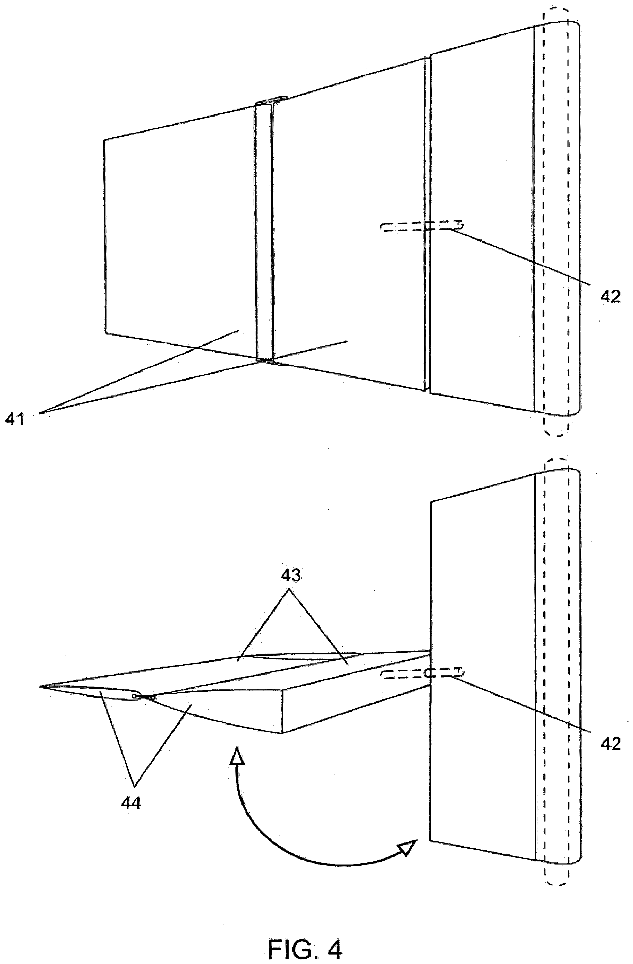

### Réduction/augmentation de la surface au vent d'un segment (FIG. 4)

Le morcèlement de la voile permet également de gérer la pose et dépose de « ris », afin de faire varier la surface de voile exposée au vent. Le système de réduction par segment consiste, non pas à supprimer de la surface, comme sur une voile traditionnelle, mais d'en modifier l'orientation pour la rendre inopérante. Pour ce faire, chaque segment de voile (41) va pouvoir effectuer une rotation dans le plan horizontal, autour d'un axe situé en son milieu (42), de manière à présenter au vent, non pas sa surface (43), mais sa section (44), sur laquelle, le vent n'aura pas plus de prise que sur un élément de gréement traditionnel (mât, bôme...). L'augmentation de surface s'appuie sur le processus inverse pour chaque segment.

Pour une description plus complète du fonctionnement se référer au brevet n° FR13 00180.

Le dispositif selon l'invention apporte à la voile rigide les éléments de souplesse et de manœuvrabilité à même de simplifier son utilisation en mer. Il devrait donc, de fait, permettre de démocratiser l'utilisation de la voile « aile » et la faire sortir du seul registre de la haute compétition pour la faire entrer dans des domaines aussi variés que la plaisance ou le transport maritime.

## Revendications

1. Voile rigide de type « aile » segmentée, consistant dans le morcèlement horizontal de la voile en segments indépendants, constitués chacun d'un volet avant et d'un volet arrière, chaque segment conservant les caractéristiques de la voile « aile », la cohérence de la voile est assurée en reliant les segments par leurs volets avant (21), permettant de régler leur liberté relative, jouant sur l'angle que chaque segment peut prendre par rapport à ses voisins, pour les bateaux de petite dimension, cette liaison est réalisée, par un système simple de câbles (20), passant de segment en segment et dont la tension, par enroulement autour d'un tambour (22), règle leur liberté relative, pour les bâtiments de plus grande taille, le réglage de leur liberté relative peut être réalisé par tout système mécanique et/ou électromécanique approprié, la conduite de la voile, c'est-à-dire son orientation et sa puissance, est assurée par le passage d'une « écoute » (30), corde reliant les segments, de haut en bas, par leurs volets arrière (31), le réglage de la voile s'effectue alors comme sur un voilier traditionnel, par tension / lâcher de l'écoute passant par une poulie (32) fixée au pont du navire.

## Patentansprüche

1. Steifes Segel vom Typ segmentierter "Flügel", bestehend aus der horizontalen Stückelung des Segels in unabhängige Segmente, die jeweils aus einem vorderen Teilbereich und einem hinteren Teilbereich gebildet sind, wobei jedes Segment die Merkmale des Segels "Flügel" beibehält, wobei die Kohärenz des Segels durch Verbinden der Segmente durch ihre vorderen Teilbereiche (21) gewährleistet ist und das Regeln ihrer relativen Freiheit erlaubt, was sich auf den Winkel auswirkt, den jedes Segment im Verhältnis zu seinen Nachbarn annehmen kann, bei Booten kleiner Abmessung ist diese Verbindung durch ein einfaches Kabelsystem (20) verwirklicht, das von Segment zu Segment verläuft und dessen Spannung durch Wickeln um eine Trommel (22) ihre relative Freiheit regelt, bei Schiffen größerer Größe kann die Einstellung ihrer relativen Freiheit durch jedes geeignete mechanische und / oder elektromechanische System verwirklicht sein, das Führen des Segels, d. h. seine Ausrichtung und seine Leistung, ist durch den Durchgang einer "Segelleine" (30) gewährleistet, ein Seil, das die Segmente von oben nach unten durch ihre hinteren Teilbereiche (31) verbindet, das Regeln des Segels erfolgt dann wie bei einem traditionellen Segelschiff per Spannen / Loslassen der Segelleine, die durch eine Seilscheibe (32) hindurchtritt, die an der Brücke des Schiffs befestigt ist.

## Claims

1. A segmented "wing"-type rigid sail, consisting in horizontally dividing the sail into independent segments, each consisting of a front flap and a rear flap, each segment keeping the characteristics of the "wing" sail, the consistency of the sail is provided by connecting the segments through their front flaps (21), enabling their relative freedom to be adjusted, varying the angle that each segment can take with respect to its neighbours, for small size boats, this connexion is made by a simple cable system (20), passing from one segment to the other and the tension of which, by winding around a drum (22), adjusts their relative freedom, for larger size vessels, the adjustment of their relative freedom can be made by any suitable mechanical and/or electromechanical system, the sail handling, that is its orientation and power, is provided by passing a "sheet" (30), being a rope connecting the segments, from top to bottom, through their rear flaps (31), adjusting the sail is thereby performed as on a conventional sailing boat, by tensioning/releasing the sheet passing through a pulley (32) fastened to the ship deck.
